# EUROPÄISCHE PATENTSCHRIFT

(11) **EP 3 022 793 B1**
(45) Veröffentlichungstag und Bekanntmachung des Hinweises auf die Patenterteilung: **26.02.2020**
(21) Anmeldenummer: 14735577.0
(22) Anmeldetag: 04.07.2014
(51) Int. Cl.: H01M 8/18, H01M 8/20, H01M 8/24, H01M 8/02, H01M 8/247, H01M 8/2465, H01M 8/2425, H01M 8/0297, H01M 8/0273, H01M 8/0258

(54) **ZELLE UND ZELLSTACK EINER REDOX-FLOW-BATTERIE**
CELL AND CELL STACK OF A REDOX FLOW BATTERY
CELLULE ET PILE DE CELLULES D'UNE BATTERIE À FLUX REDOX

(30) Priorität: 16.07.2013 DE 102013107516
(43) Veröffentlichungstag der Anmeldung: 25.05.2016
(73) Patentinhaber: Volterion Besitz GmbH & Co. KG, 72226 Simmersfeld (DE)
(72) Erfinder: SEIPP, Thorsten, 45481 Mülheim a.d.Ruhr (DE); BERTHOLD, Sascha, 46045 Oberhausen (DE); BURFEIND, Jens, 46047 Oberhausen (DE); KOPIETZ, Lukas, 47198 Duisburg (DE)
(74) Vertreter: Cohausz & Florack
(86) Internationale Anmeldenummer: PCT/EP2014/064299
(87) Internationale Veröffentlichungsnummer: WO 2015/007543

(56) Entgegenhaltungen:
- EP-A1- 2 933 864
- WO-A1-01/70376
- WO-A1-97/24778
- WO-A1-2014/062482
- WO-A2-2006/031268
- AT-A1- 510 250
- DE-A1- 10 235 419
- DE-A1-102010 023 252
- DE-C1- 10 230 342
- JP-A- H01 239 771
- JP-A- 2001 155 758
- US-A- 5 645 626
- US-A1- 2004 170 893
- US-A1- 2008 292 964
- US-A1- 2011 311 896

## Beschreibung

Die Erfindung betrifft eine Zelle einer Redox-Flow-Batterie, mit wenigstens einem Zellrahmenelement, einer Membran und zwei Elektroden, wobei das wenigstens eine Zellrahmenelement, die Membran und die zwei Elektroden zwei voneinander getrennte Zellinnenräume abschließen, wobei in dem wenigstens einen Zellrahmenelement wenigstens vier separate Kanäle so vorgesehen sind, dass die beiden Zellinnenräume von unterschiedlichen Elektrolytlösungen durchströmt werden können, und wobei die Zelle mit Ausnahme der wenigstens vier separaten Kanäle flüssigkeitsdicht ausgebildet ist. Ferner betrifft die Erfindung einen Zellstack einer Redox-Flow-Batterie mit wenigstens einer solchen Zelle.

Redox-Flow-Batterien sind bereits in verschiedenen Ausführungen bekannt. Solche Ausführungen sind beispielhaft in der AT 510 250 A1 und der US 2004/0170893 A1 beschrieben. Ein wichtiger Vorteil der Redox-Flow-Batterien liegt in ihrer Eignung, sehr große Mengen an elektrischer Energie speichern zu können. Die Energie wird dabei in Elektrolyten gespeichert, die platzsparend in sehr großen Tanks bereitgehalten werden können. Die Elektrolyte weisen meist metallische Ionen unterschiedlicher Oxidationsstufen auf. Zur Entnahme von elektrischer Energie aus den Elektrolyten oder zum Wiederaufladen derselben werden die Elektrolyte durch eine sogenannte elektrochemische Zelle gepumpt. Im Folgenden wird der Einfachheit halber anstelle des Begriffs elektrochemische Zelle lediglich der Begriff Zelle verwendet.

Die Zelle wird dabei aus zwei Halbzellen gebildet, die über eine Membran voneinander getrennt sind und jeweils einen Zellinnenraum, einen Elektrolyt und eine Elektrode umfassen. Die Membran ist semipermeabel und hat die Aufgabe, Kathode und Anode einer elektrochemischen Zelle räumlich und elektrisch voneinander zu trennen. Dazu muss die Membran für bestimmte Ionen durchlässig sein, welche die Umwandlung der gespeicherten chemischen Energie in elektrische Energie bewirken. Membrane können beispielsweise aus mikroporösen Kunststoffen oder Polyethylen gebildet werden. An beiden Elektroden der Zelle, also an der Anode und an der Kathode, laufen Redox-Reaktionen ab, wobei von den Elektrolyten an einer Elektrode Elektronen freigesetzt und an der anderen Elektrode Elektronen aufgenommen werden. Die metallischen und/oder nichtmetallischen Ionen der Elektrolyte bilden Redox-Paare und erzeugen folglich ein Redox-Potential. Als Redox-Paare kommen beispielsweise Eisen-Chrom, Polysulfid-Bromid, Vanadium oder andere Schwermetalle in Frage. Diese oder auch andere Redox-Paare können grundsätzlich in wässriger oder nicht wässriger Lösung vorliegen.

Die Elektroden einer Zelle, zwischen denen sich infolge der Redoxpotentiale eine Potentialdifferenz ausbildet, sind außerhalb der Zelle, z.B. über einen elektrischen Verbraucher, elektrisch miteinander verbunden. Während die Elektronen außerhalb der Zelle von einer Halbzelle zur anderen gelangen, treten Ionen der Elektrolyte durch die Membran direkt von einer Halbzelle zur anderen Halbzelle über. Zum Wiederaufladen der Redox-Flow-Batterie kann an die Elektroden der Halbzellen anstelle des elektrischen Verbrauchers, beispielsweise mittels eines Ladegeräts, eine Potentialdifferenz angelegt werden, durch welche die an den Elektroden der Halbzellen ablaufenden Redox-Reaktionen umgekehrt werden.

Zur Bildung der beschriebenen Zelle werden Zellrahmen verwendet, die einen Zellinnenraum umlaufend umschließen. Jede Halbzelle umfasst dabei einen derartigen Zellrahmen, der meist im Spritzgussverfahren aus einem thermoplastischen Kunststoff hergestellt wird. Zwischen zwei Zellrahmen wird die Membran angeordnet, die Elektrolyte der Halbzellen in Bezug auf einen konvektiven Stoffaustausch voneinander trennt, eine Diffusion bestimmter Ionen von einer Halbzelle in die andere Halbzelle aber zulässt. Den Zellinnenräumen wird zudem jeweils eine Elektrode derart zugeordnet, dass diese mit den die Zellinnenräume durchströmenden Elektrolyten in Kontakt stehen. Die Elektroden können beispielsweise den Zellinnenraum eines jeden Zellrahmens auf der der Membran abgewandten Seite abschließen. Jeder Zellrahmen weist Öffnungen und Kanäle auf, durch welche der entsprechende Elektrolyt von einer Versorgungsleitung in den jeweiligen Zellinnenraum strömen und von dort wieder abgezogen sowie einer Entsorgungsleitung zugeführt werden kann. Die Elektrolyte der Halbzellen werden dabei über die Versorgungsleitung und die Entsorgungsleitung von einem Vorlagebehälter in einen Sammelbehälter umgepumpt. Dies erlaubt eine erneute Verwendung der Elektrolyte, die folglich weder verworfen noch ersetzt werden müssen.

Bedarfsweise wird eine Mehrzahl gleichartiger Zellen in einer Redox-Flow-Batterie zusammengefasst. Meist werden die Zellen dazu aufeinandergestapelt, weshalb man die Gesamtheit der Zellen auch als Zellstapel oder Zellstack bezeichnet. Die einzelnen Zellen werden meist parallel zueinander von den Elektrolyten durchströmt, während die Zellen meist elektrisch hintereinander geschaltet werden. Die Zellen sind also meist hydraulisch parallel und elektrisch in Reihe geschaltet. In diesem Fall ist der Ladungszustand der Elektrolyte in jeweils einer der Halbzellen des Zellstapels gleich.

Zur Verteilung der Elektrolyte auf die entsprechenden Halbzellen des Zellstacks und zur gemeinsamen Abführung der Elektrolyte aus den jeweiligen Halbzellen sind Halbzellen untereinander mit Kanälen verbunden. Da jede Halbzelle bzw. jeder Zellinnenraum einer Zelle von einem anderen Elektrolyt durchströmt wird, müssen die beiden Elektrolyte während des Durchtritts durch den Zellstack voneinander getrennt werden. In den Zellrahmen bzw. Zellrahmenelementen sind dazu in der Regel vier Bohrungen vorgesehen, die in jedem Zellrahmenelement und/oder im Zellstack einen Kanal senkecht zur jeweiligen Zelle, zum jeweiligen Zellinnenraum und/oder längs des Zellstacks bilden. Jeweils zwei der Kanäle dienen dem Transport eines Elektrolyten. Dabei wird über einen Kanal der Elektrolyt zum Zellinnenraum zugeführt, während über den anderen Kanal der Elektrolyt aus dem Zellinnenraum abgeführt wird. In jeder Halbzelle zweigen daher von zwei Kanälen Verteilungskanäle ab, die mit dem Zellinnenraum verbunden sind, um so das Zuführen und Abführen von Elektrolyten zu den Halbzellen bzw. das Durchströmen der Zellinnenräume mit Elektrolyten zu ermöglichen.

Damit die Zellen und bedarfsweise die Stacks flüssigkeitsdicht sind, werden die entsprechenden Zellrahmen und bedarfsweise zusätzlich die entsprechenden Elektroden und Membrane aufeinander gepresst, wobei ein Kontakt zwischen bestimmten Elektrolyten und bestimmten Elektroden vermieden werden muss. Zur Abdichtung der Kanäle und/oder Zellinnenräume werden meist Dichtungen etwa in Form von O-Ringen, Flachdichtungen, aufgespritzten Dichtungen oder dergleichen verwendet. Um die Flüssigkeitsdichtheit der Zellen bzw. Zellstacks sicherstellen zu können, müssen recht hohe Flächenpressungen an den Dichtungen bereitgestellt werden. Deshalb werden die Zellen bzw. Zellstacks in eine Verspanneinrichtung zwischen endständigen Verspannplatten eingebracht, die über seitlich längs zum Zellstack verlaufende Zugstangen gegen die Zelle bzw. den Zellstack gepresst werden.

Bekannte Redox-Flow-Batterien sind in Relation zu deren Leistung verhältnismäßig groß. Daher bestehen Bestrebungen, die Leistungsdichte der Redox-Flow-Batterien weiter zu steigern. US2008/0292964 offenbart eine Zelle einer Redox-Flow-Batterie, mit wenigstens einem Zellrahmenelement, einer Membran und bipolar Elektroden, wobei das wenigstens eine Zellrahmenelement, die Membran und die bipolar Elektroden zwei voneinander getrennte Zellinnenräume umschließen , wobei wenigstens vier separate Kanäle so vorgesehen sind, dass die beiden Zellinnenräume von unterschiedlichen Elektrolytlösungen durchströmt werden können, wobei ein Zellrahmenelement mit einer Elektrode verschweißt ist.

Der vorliegenden Erfindung liegt daher die Aufgabe zugrunde, eine Zelle und einen Zellstack jeweils der eingangs genannten und zuvor näher beschriebenen Art vorzuschlagen, um einen einfacheren und effizienteren Aufbau der Zelle und des Zellstacks zu ermöglichen.

Diese Aufgabe wird bei einer Zelle nach dem Oberbegriff von Anspruch 1 dadurch gelöst, dass wenigstens fünf Zellrahmenelemente vorgesehen sind und dass die beiden Elektroden und die Membran jeweils mit einem separaten Zellrahmenelement verschweißt sind.

Die zuvor genannte Aufgabe ist zudem gemäß Anspruch 14 durch einen Zellstack mit wenigstens einer solchen Zelle gelöst.

Die Erfindung hat erkannt, dass durch das Verschweißen des wenigstens einen Zellrahmenelements mit der Membran, den beiden Elektroden und/oder mit wenigstens einem weiteren Zellrahmenelement, auf ein Verpressen der Zellen bzw. Zellstacks verzichtet werden kann und dass dadurch die Zellen insgesamt dünner ausgebildet werden können. Die Zellrahmenelemente sind dann nämlich nicht mehr so hohen mechanischen Belastungen ausgesetzt. Außerdem eröffnet die Erfindung völlig neue Designmöglichkeiten hinsichtlich der Ausbildung der Zellrahmenelemente, da diese im Bereich der Dichtflächen nicht mehr so hohen Flächenpressungen ausgesetzt werden müssen. Beispielsweise kann der Rahmen des wenigstens einen Zellrahmenelements schmaler ausgebildet werden, etwa um den relativen Flächenanteil des Zellinnenraums zu vergrößern.

Grundsätzlich kann erfindungsgemäß auch wenigstens ein Zellrahmenelement mit einer Membran, einer Elektrode und/oder wenigstens einem weiteren Zellrahmenelement verpresst oder anderweitig verbunden werden, um eine ausreichende Dichtheit zu erzielen. Ob und wie dies geschieht, kann abhängig vom Einzelfall festgelegt werden. Es erfolgt aber in jedem Fall ein teilweises Verschweißen wie zuvor beschrieben, und zwar insbesondere zwischen den Bauteilen der Zelle, wo das Zusammenpressen derselben zu besonderen Nachteilen führt. Bei der Membran kann es sich vorzugsweise um eine semipermeable Membran, eine ionenleitende Membran und/oder eine poröse Membran handeln.

Im Übrigen handelt es sich bei den Elektroden vorzugsweise um bipolare Platten. Die Elektroden grenzen an wenigstens einen Zellinnenraum vorzugsweise auf beiden Seiten an Zellinnenräume unterschiedlicher Halbzellen oder Zellen, wenn ein Zellstack vorgesehen ist, an, wobei die Elektrode die wenigstens eine Halbzelle bzw. wenigstens den entsprechenden Zellinnenraum zu einer Seite abschließt. Die Membran schließt auf beiden Seiten jeweils eine Halbzelle bzw. einen Zellinnenraum der Zelle ab. Im Falle eines Zellstacks umfasst dieser vorzugsweise wenigstens 5, insbesondere wenigstens 10, Zellen.

Wenn im Zusammenhang mit der Erfindung von einem Verschweißen die Rede ist, so ist dabei vorzugsweise ein umlaufendes Verschweißen gemeint, um eine umlaufende Flüssigkeitsdichtheit bereitzustellen. Insbesondere ist umlaufend dabei im Wesentlichen in einer Ebene parallel zu einer Ebene der Zelle bzw. der Halbzelle und/oder parallel zu einem Zellinnenraum gemeint. Zudem werden insbesondere die Ränder der entsprechenden Bauteile miteinander verschweißt, so dass umlaufend insbesondere umlaufend zu wenigstens einem dieser Ränder gemeint ist.

Bei einer ersten bevorzugten Ausgestaltung der Zelle ist das wenigstens eine Zellrahmenelement mit der Membran, den beiden Elektroden und/oder mit wenigstens einem weiteren Zellrahmenelement durch Laserschweißen, Heißluftschweißen, Heizelementschweißen und/oder Ultraschallschweißen verschweißt. Dies kann nach einer der Normen EN 14610 und/oder DIN 1910-100 erfolgen. Ein Verschweißen auf die genannte Art ist einfach sowie kostengünstig durchzuführen und erlaubt die Bereitstellung einer flüssigkeitsdichten Verbindung. Dabei kann der Laser so eingestellt werden, dass der Laserstrahl im durchdrungenen Material nur abschnittsweise nennenswert absorbiert wird, um an diesen Stellen lokal begrenzt thermische Energie für das Verschweißen in das Material einzubringen.

Dabei handelt es sich insbesondere um ein sogenanntes Laserdurchstrahlschweißen, bei dem die Erwärmung und der Fügevorgang nahezu gleichzeitig ablaufen können, und zwar in der abschließenden Ausrichtung der Bauteile zueinander. Die Erwärmung kann beispielsweise durch Absorption des Laserstrahls an bestimmten Pigmenten, insbesondere Pigmenten einer bestimmten Farbe, erfolgen. Es können daher an der zu verschweißenden Stelle gezielt entsprechende Pigmente vorgesehen werden, um ein gezieltes Einleiten von Wärme zu generieren. Es können auch ein Fügepartner mit einem hohen Transmissionsgrad und ein Fügepartner mit einem hohen Absorptionsgrad für den verwendeten Laserstrahl verwendet werden. Das Bauteil mit dem hohen Absorptionsgrad kann beispielsweise durch bestimmte, den Laserstrahl absorbierende Pigmente eingefärbt sein oder anderweitig mit Pigmenten durchsetzt sein. Das Bauteil mit dem hohen Transmissionsgrad kann dagegen im Wesentlichen frei von solchen Pigmenten sein. Da der Laserstrahl nur lokal absorbiert wird, können die zu verschweißenden Bauteile vor dem Erwärmen bereits in der endgültigen Lage zueinander positioniert werden. Der Laserstrahl strahlt dann durch das Bauteil oder die Bauteile mit hohem Transmissionsgrad bis zu dem Bauteil oder den Bauteilen mit hohem Absorptionsgrad, wo der Laserstrahl wenigstens teilweise absorbiert wird. Um eine gute Verschweißbarkeit zu erzielen, kann das wenigstens eine Zellrahmenelement, die wenigstens eine Elektrode und/oder die Membran aus Kunststoff und/oder einem Kunststoff enthaltenden Verbundwerkstoff gebildet sein. Bei dem Verbundwerkstoff kann es sich bedarfsweise um einen Compoundwerkstoff handeln. Im Falle eines Verbundwerkstoffs oder eines Compoundwerkstoffs, kann dieser einlagig oder mehrlagig aufgebaut sein. Im letztgenannten Fall unterscheiden sich die Lagen hinsichtlich ihrer Zusammensetzung oder ihres Aufbaus untereinander. Besonders einfach und kostengünstig ist jedoch ein einlagiger, vorzugsweise homogener, Aufbau des wenigstens einen Zellrahmenelements, der wenigstens eine Elektrode und/oder der Membran. Ein Compoundwerkstoff wird aus einem Compoundmaterial gebildet.

Die Verschweißbarkeit kann weiter gesteigert werden, wenn der Kunststoff ein Thermoplast ist. Aus Gründen der Verschweißbarkeit und der mechanischen Eigenschaften handelt es sich bei dem Thermoplasten vorzugsweise um ein Polyolefin, insbesondere um Polyethylen (PE), Polypropylen (PP), Polyphenylensulfid (PPS), Polyetheretherketon (PEEK), Polyvinylchlorid (PVC) und/oder Polyamid (PA).

Wenn die Membran und/oder die wenigstens eine Elektrode nicht mit dem wenigstens einen angrenzenden Zellrahmenelement verschweißt ist, kann die Membran und/oder die wenigstens eine Elektrode flüssigkeitsdicht von einem Zellrahmenelement umspritzt oder umgossen sein. Dabei erfolgt das Umspritzen vorzugsweise durch Spritzgießen. Auf diese Weise kann die Flüssigkeitsdichtheit einfach bereitgestellt werden. Alternativ oder zusätzlich kann die Membran und/oder die wenigstens eine Elektrode durch Pressung zwischen zwei miteinander verschweißten Zellrahmenelementen flüssigkeitsdicht gehalten sein. Dann muss eine entsprechende Presskraft bereitgestellt werden, so dass diese Option weniger bevorzugt sein kann. Es kann jedoch sein, dass die Presskraft auf einfache Weise bereitgestellt werden kann, etwa durch das Verschweißen anderer Bauteile, vorzugsweise durch miteinander verschweißte Zellrahmenelemente, der Zelle oder angrenzender Zellen des Zellstacks. Im Regelfall wird das Verschweißen gegenüber dem Umspritzen und/oder Umgießen bevorzugt sein. Die entsprechenden Schweißnähte halten mechanischen Belastungen nämlich meist besser Stand, so dass die Gefahr von Undichtigkeiten im Falle des Umspritzens und/oder des Umgießens größer ist.

Um die Leistungsdichte der Redox-Flow-Batterie zu erhöhen, den Aufbau der Redox-Flow-Batterie zu vereinfachen und/oder das Verschweißen zu vereinfachen, können die wenigstens vier Kanäle Öffnungen an wenigstens einer Schmalseite, insbesondere wenigstens zwei Schmalseiten, der Zelle und/oder des wenigstens einen Zellrahmenelements vorgesehen sein. Die von den Schmalseiten umfassten Stirnseiten der Zelle und/oder der Zellrahmenelemente können dann ohne Öffnungen für die Elektrolyte ausgebildet werden, so dass dort keine Gefahr eines Kontakts zwischen Elektrolyt und Elektrode und/oder Membran besteht. Die Stirnseiten sind dabei vorzugsweise im Wesentlichen parallel zu den Zellinnenräumen, den Elektroden und/oder der wenigstens einen Membran ausgebildet. Es muss also kein separater Bereich an den Stirnseiten der Zellrahmenelemente für die Öffnungen und die senkrecht zum Zellinnenraum vorgesehenen Kanäle vorgesehen werden. Die Zellrahmelemente können somit schmaler ausgebildet und die Leistungsdichte erhöht werden. Zudem muss aufgrund entsprechender Kanäle jeweils nur ein Elektrolyt durch den Rahmen eines Zellrahmenelements geleitet werden, und zwar hin zum entsprechenden Zellinnenraum und weg vom Zellinnenraum. Das bedeutet, dass die wenigstens vier Kanäle zum Durchströmen der beiden Zellinnenräume einer Zelle mit jeweils einem Elektrolyt auf wenigstens zwei Zellrahmenelemente der Zelle aufgeteilt werden können. Dies kann so erfolgen, dass jedes Zellrahmenelement wenigstens zwei Kanäle und/oder Bohrungen aufweist, und zwar insbesondere jeweils für einen Elektrolyt.

Bei einer weiteren bevorzugten Ausgestaltung der Zelle ist die Membran und/oder die wenigstens eine Elektrode mit wenigstens einem Zellrahmenelement verschweißt. Auf diese Weise kann die Membran und/oder die wenigstens eine Elektrode fixiert und zudem der Zellinnenraum der wenigstens einen entsprechenden Halbzelle abgedichtet werden. Außerdem kann eine Zelle so leicht aufgebaut werden, etwa indem ein Zellrahmenelement den Zellinnenraum umschließt und dieser Zellinnenraum seitlich durch Verschweißen des Zellrahmenelements mit einer Membran und/oder einer Elektrode wenigstens zu einer Seite flüssigkeitsdicht abgeschlossen wird. So kann beispielsweise die Zelle durch zwei mit der Membran und den Elektroden verschweißte Zellrahmenelemente bereitgestellt werden, indem die Zellrahmenelemente separat oder über die Membran miteinander verschweißt sind. Eine solche Zelle ist dann mit Ausnahme der Kanäle flüssigkeitsdicht und kann problemlos mit anderen Zellen zu einem Zellstack vereinigt werden. Letztlich können also wenigstens zwei Zellrahmenelemente vorgesehen sein, wobei ein Zellrahmenelement mit der Membran, mit einer Elektrode und mit einem weiteren, vorzugsweise mit der weiteren Elektrode verschweißten, Zellrahmenelement verschweißt ist.

Ganz grundsätzlich können zwei Zellrahmenelemente miteinander verschweißt sein, um die Zelle einfach aufbauen und leicht abdichten zu können. Alternativ oder zusätzlich kann die Membran mit zwei Zellrahmenelementen verschweißt sein. So lässt sich beispielsweise leicht das Zentrum der Zelle abdichten. Die Außenseiten der Zelle können leicht abgedichtet werden, wenn zusätzlich oder alternativ die Elektroden jeweils mit wenigstens einem Zellrahmenelement verschweißt sind. Anders ausgedrückt können wenigstens zwei Zellrahmenelemente jeweils mit einer Elektrode und mit der Membran verschweißt sein.

Bei der Zelle sind wenigstens fünf Zellrahmenelemente vorgesehen. Die beiden Elektroden und die Membran sind dabei jeweils mit einem separaten Zellrahmenelement verschweißt. Zudem können die fünf Zellrahmenelemente untereinander verschweißt sein. Es ist dann möglich, die Zelle unter Verwendung von zwei Zellrahmenelementen aufzubauen die jeweils mit einer Elektrode verschweißt sind, wobei diese beiden Zellrahmenelemente jeweils mit einem Zellrahmenelement verschweißt sind, das umlaufend einen Zellinnenraum umschließt. Letztere Zellrahmenelemente können dann mit einem dazwischen vorgesehenen Zellrahmenelement verschweißt werden, das mit einer Membran verschweißt ist. Es ergibt sich also ein modularer Aufbau. Die Elektroden werden von einer Art von Zellrahmenelementen bereitgestellt, die mit einer Elektrode verschweißt sind. Die Zellinnenräume und/oder die Verteilungskanäle für die Elektrolyte werden im Wesentlichen von anderen Zellrahmenelementen bereitgestellt, während die Membran über ein weiteres Zellrahmenelement bereitgestellt wird, das mit der Membran verschweißt ist. Es können natürlich auch noch weitere Zellrahmenelemente zum Aufbau einer Zelle vorgesehen sein. Dies ist jedoch aufwendiger und daher weniger bevorzugt. Im Falle eines Zellstacks sind zudem die mit einer Elektrode verschweißten Zellrahmenelemente bei den angrenzenden Zellen entbehrlich. Die angrenzenden Zellen und bedarfsweise die weiteren Zellen kommen dann also mit vier weiteren Zellrahmen aus, die wie zuvor beschrieben ausgebildet sind. Diese stellen dann zwei weitere Zellinnenräume, eine Membran und eine weitere Elektrode bereit.

Um die Elektrode einfach mit einem Zellrahmenelement verschweißen zu können, bietet es sich an, wenn die Elektrode wenigstens teilweise aus wenigstens einem Kunststoff, insbesondere aus wenigstens einem Thermoplasten, vorzugsweise Polyethylen (PE), Polypropylen (PP), Polyphenylensulfid (PPS), Polyetheretherketon (PEEK), Polyvinylchlorid (PVC) und/oder Polyamid (PA), gebildet wird. Weiter vorzugsweise besteht die Elektrode aus einem Verbund aus einem Kunststoff und leitfähigen Partikeln, vorzugsweise in Form von Kohlenstoff, Graphit, Ruß, Titancarbid (TiC), Bornitrid (BN), wenigstens einem Metall und/oder wenigstens einer Metallverbindung. Vorzugsweise sind die leitfähigen Partikel, vorzugsweise homogen, als disperse Phase in einer kontinuierlichen Phase oder Matrix aus dem wenigstens einen Kunststoff verteilt angeordnet.

Grundsätzlich können angrenzende Zellrahmenelemente einer Zelle oder auch angrenzender Zellen direkt miteinander verschweißt sein. Es kann aber auch vorgesehen sein, dass aneinandergrenzende Zellrahmenelemente einer Zelle und/oder angrenzender Zellen über eine Elektrode oder eine Membran miteinander verschweißt sind. Dann ist jedes Zellrahmenelement mit der Elektrode oder der Membran aber nicht mit dem jeweils anderen Zellrahmenelement verschweißt.

Zum einfachen Aufbau eines Zellstacks bietet es sich an, wenn wenigstens eine Zelle der zuvor beschriebenen Art, insbesondere ein Zellrahmenelement oder eine Elektrode der Zelle, mit einem Zellrahmenelement einer angrenzenden Zelle verschweißt ist. Die angrenzende Zelle kann dabei gleichartig mit der Zelle der zuvor beschriebenen Art ausbildet sein. Vorzugsweise sind alle Zellen des Zellstacks gleichartig aufgebaut.

Alternativ oder zusätzlich können die Zellen eines Zellstacks jeweils an gegenüberliegenden Seiten mit einem, vorzugsweise mit einer Membran verschweißten, Zellrahmenelement einer angrenzenden Zelle verschweißt sein. Eine Ausnahme können dabei die endständigen Zellen des Zellstacks bilden. Diese können vorzugsweise an einer Endplatte angrenzen. Diese können einen flächigen Kontakt jeweils mit der angrenzenden endständigen Elektrode aufweisen und über wenigstens eine Leitung beispielsweise an wenigstens einen Verbraucher angeschlossen sein.

Nachfolgend wird die Erfindung anhand einer lediglich Ausführungsbeispiele darstellenden Zeichnung näher erläutert. In der Zeichnung zeigt
- Fig. 1: einen aus dem Stand der Technik bekannten Zellstack einer Redox-Flow-Batterie in einem Längsschnitt,
- Fig. 2: eine Detaildarstellung des Zellstacks aus Fig. 1,
- Fig. 3: ein Zellrahmenelement des Zellstacks aus Fig. 1 in Draufsicht,
- Fig. 4: eine erste erfindungsgemäße Zelle eines ersten erfindungsgemäßen Zellstacks in einer seitlichen Schnittansicht,
- Fig. 5: ein erstes Zellrahmenelement der Zelle von Fig. 4 in einer Draufsicht,
- Fig. 6: ein zweites Zellrahmenelement der Zelle von Fig. 4 in einer Draufsicht,
- Fig. 7: ein drittes Zellrahmenelement der Zelle von Fig. 4 in einer Draufsicht,
- Fig. 8: eine zweite erfindungsgemäße Zelle eines zweiten erfindungsgemäßen Zellstacks in einer seitlichen Schnittansicht,
- Fig. 9: ein Zellrahmenelement der Zelle von Fig.8 in einer Schnittansicht,
- Fig. 10: eine dritte erfindungsgemäße Zelle eines dritten erfindungsgemäßen Zellstacks und
- Fig. 11: ein Zellrahmenelement der Zelle von Fig. 10 in einer Draufsicht und
- Fig. 12: ein weiteres Zellrahmenelement der Zelle von Fig. 10 in einer Draufsicht.

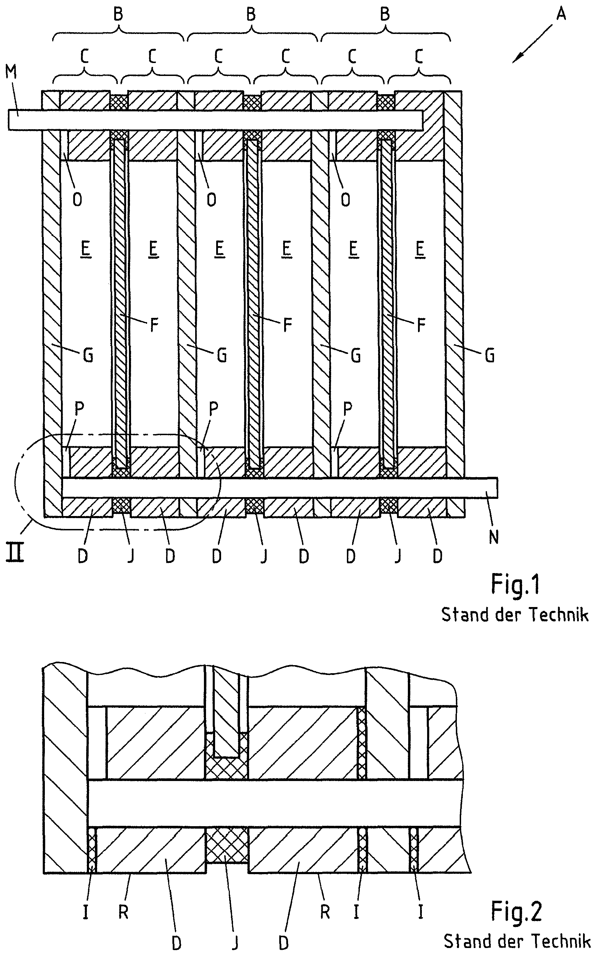

In den Fig. 1 und 2 ist ein Zellstack A, also ein Zellstapel einer aus dem Stand der Technik bekannten und eingangs näher beschriebenen Redox-Flow-Batterie in einem Längsschnitt dargestellt. Der Zellstack A umfasst drei Zellen B, die jeweils zwei Halbzellen C mit korrespondierenden Elektrolyten aufweisen. Jede Halbzelle C weist ein Zellrahmenelement D auf, das einen Zellinnenraum E umfasst, durch den ein in einem Vorlagebehälter bevorrateter Elektrolyt hindurchgeleitet werden kann. Der Zellinnenraum E ist angrenzend zum Zellrahmenelement D der zweiten Halbzelle C durch eine zwischen den Zellrahmenelementen D der beiden Halbzellen C vorgesehenen, semipermeablen Membran F verschlossen. An der anderen Stirnseite der Zellrahmenelemente D sind die Halbzellen durch Elektroden G verschlossen. Die Elektroden G verschließen zudem die Zellinnenräume E angrenzend zur nächsten Zelle B.

Die Elektrode G liegt bei dem dargestellten Zellstack A flächig auf einer Außenseite H des Zellrahmens D auf. Die Elektrode G und die Stirnseiten der Zellrahmenelemente D liegen an gegenüberliegenden Seiten der Elektrode G an einem Dichtmaterial I an. Zwischen den anderen Stirnseiten der Zellrahmenelemente D einer Zelle B befindet sich ein Dichtmaterial J, in dem die Membran F dichtend aufgenommen ist.

Längs zum Zellstack A erstrecken sich bei der dargestellten Redox-Flow-Batterie vier Kanäle zum Zuführen und Abführen von Elektrolyt. Von zwei Kanälen zweigen in jeweils einer Halbzelle C jeder Zelle B Verteilungskanäle O ab, über die der Elektrolyt dem entsprechenden Zellinnenraum E der Halbzelle C zugeführt werden kann. An gegenüberliegenden Abschnitten der entsprechenden Zellrahmen D sind Verteilungskanäle P vorgesehen, über die der Elektrolyt abgeleitet werden kann.

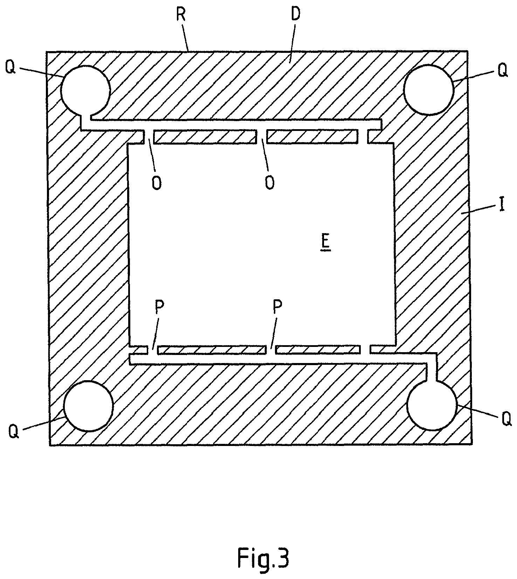

In der Fig. 3 ist eine Draufsicht auf ein Zellrahmenelement D des Zellstacks aus Fig. 1 dargestellt. In den Ecken des Zellrahmens D sind vier Bohrungen Q vorgesehen, von denen jede Bohrung ein Teil eines Kanals für die Elektrolyte bildet. Die verzweigten Verteilungskanäle O,P sind als Vertiefungen in den um den Zellinnenraum E umlaufenden Rahmens R des Zellrahmenelements D eingelassen.

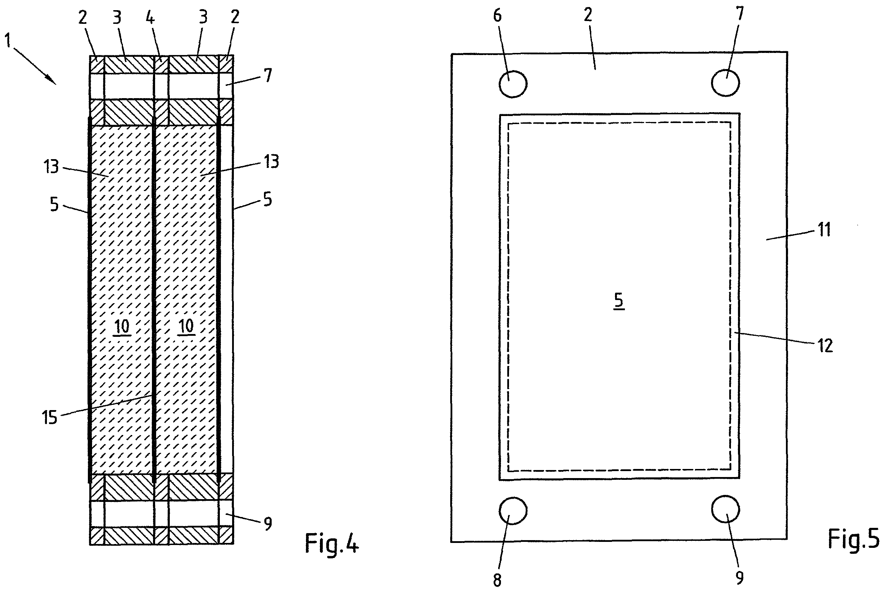

In der Fig. 4 ist eine Zelle 1 eines Zellstacks in einer Schnittansicht dargestellt. Die Zelle 1 umfasst fünf Zellrahmenelemente 2,3,4. Die äußeren Zellrahmenelemente 2 sind umlaufend mit einer Elektrode 5 verschweißt, so dass zwischen den entsprechenden Zellrahmenelementen 2 und den entsprechenden Elektroden 5 kein Elektrolyt austreten kann. Ein solches mit einer Elektrode 5 verschweißtes Zellrahmenelement 2 ist in der Fig. 5 in Draufsicht dargestellt. Das Zellrahmenelement 2 weist vier Bohrungen in Form von Kanälen 6,7,8,9 auf, die sich im Wesentlichen senkrecht zum Zellinnenraum 10 bzw. der Elektrode 5 erstrecken. Zwei dieser Kanäle 6,7 dienen dem Zuführen von unterschiedlichen Elektrolyten zu den Zellinnenräumen 10 der Zelle 1. Die beiden anderen Kanäle 8,9 dienen dem Abführen der beiden unterschiedlichen Elektrolyte. Die Elektrode 5 ist mit einem hinreichenden Abstand zu diesen Bohrungen bzw. Kanälen 6,7,8,9 mit dem Zellrahmenelement 2 verschweißt, um einen direkten Kontakt zwischen Elektrolyten und der Elektrode 5 zu vermeiden. Dabei ist die Schweißnaht zwischen dem Rahmen 11 des Zellrahmenelements 2 und dem Rand 12 der Elektrode 5 umlaufend zu dieser vorgesehen.

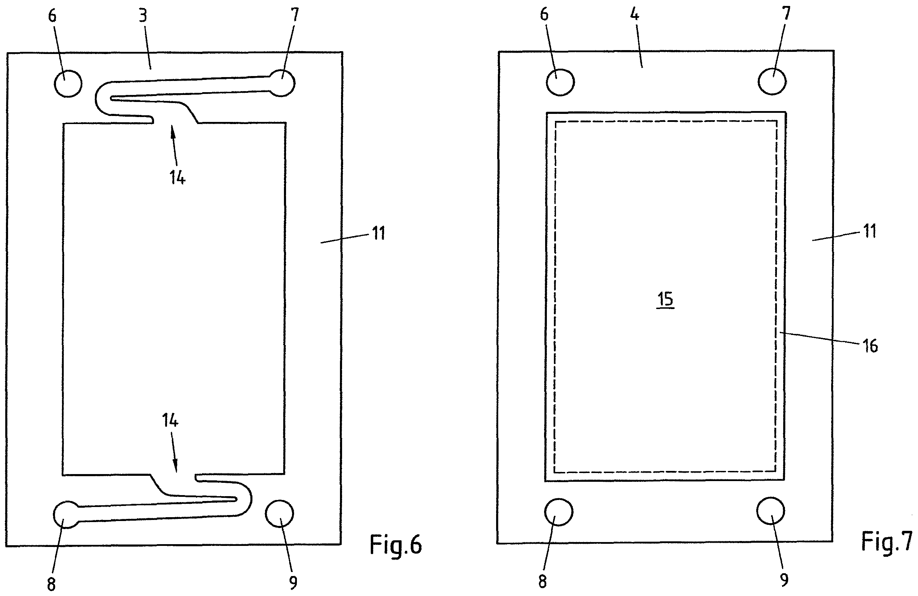

Die mit den Elektroden 5 verschweißten Zellrahmenelemente 2 sind umlaufend mit weiteren Zellrahmenelementen 3 verschweißt, so dass auch zwischen diesen Zellrahmenelementen 2,3 kein Elektrolyt austreten kann. Die beiden inneren Zellrahmen 3 bilden jeweils einen Rahmen 11, der umlaufend zu einem Zellinnenraum 10 vorgesehen ist. In den Zellinnenräumen 10 befinden sich sogenannte Reaktionsfilze 13. Die Zellinnenräume sind zudem Bestandteil unterschiedlicher Halbzellen der in der Fig. 4 dargestellten Zelle 1 eines Zellstacks. Ein entsprechendes Zellrahmenelement 3 ist in der Fig. 6 in Draufsicht auf eine Stirnseite dargestellt. Auch dieses Zellrahmenelement 3 weist vier Bohrungen bzw. Kanäle 6,7,8,9 für die beiden Elektrolyte auf. Die Bohrungen sind fluchtend zu den Bohrungen der in der Fig. 5 dargestellten Zellrahmenelemente 2 angeordnet. Zwei der Kanäle 7,8 sind über Verteilerkanäle 14 mit dem Zellinnenraum 10 verbunden. Über die Verteilerkanäle 14 kann ein Elektrolyt dem Zellinnenraum 10 zugeführt und wieder abgeführt werden. Das Zellrahmenelement 3 der anderen Halbzelle der Zelle 1 von Fig. 4 ist seitenverkehrt zu dem in der in der Fig. 6 dargestellten Zellrahmenelement 3 ausgerichtet und gleichartig ausgebildet. Auf diese Weise kann über die Verteilerkanäle 14 und die anderen Kanäle 6,9 der andere Elektrolyt dem anderen Zellinnenraum 10 zugeführt und aus dem Zellinnenraum 10 wieder abgeführt werden.

Zwischen den beiden die Zellinnenräume 10 der beiden Halbzellen der Zelle 1 umlaufend umschließenden Zellrahmenelemente 3 ist ein weiteres Zellrahmenelement 4 vorgesehen, das mit einer Membran 15 verschweißt und in der Fig. 7 dargestellt ist. Die Membran 15 ist so vorgesehen, dass sie die Zellinnenräume 10 der Halbzellen auf der den Elektroden 5 gegenüberliegenden Seite verschließt. Das mit der Membran 15 verschweißte Zellrahmenelement 4 ist ebenfalls mit den beiden angrenzenden Zellrahmenelementen 3 verschweißt, welche die Zellinnenräume 10 der Halbzellen bilden. Ferner weist das mit der Membran 15 verschweißte Zellrahmenelement 4 wie das in der Fig. 5 dargestellte Zellrahmenelement 2 vier Bohrungen in Form von Kanälen 6,7,8,9 auf, die senkrecht zur Membranebene und fluchtend mit den anderen Bohrungen ausgerichtet sind. Durch die Kanäle 6,7,8,9 strömen im Betrieb der Zelle 1 die Elektrolyte. Die Membran 15 ist entlang des Rands 16 umlaufend mit dem Rahmen 11 des mittleren Zellrahmenelements 4 flüssigkeitsdicht verschweißt.

Bei einer alternativen, nicht dargestellten Ausgestaltung der Zelle könnte auch auf den mittleren mit der Membran 15 verschweißten Zellrahmen 4 verzichtet werden. Dann könnte die Membran 15 direkt mit den beiden die Zellinnenräume 10 der Halbzellen umschließenden Zellrahmenelementen 3 verschweißt sein. Dabei können die die Zellinnenräume 10 umschließenden Zellrahmenelemente 3 bedarfsweise zusätzlich untereinander verschweißt sein. Ferner ist bei Verzicht auf das zentrale Zellrahmenelement 4 aus Fig. 4 dafür Sorge zu tragen, dass sich die Elektrolyte nicht vermischen. Dies kann dadurch gewährleistet werden, dass die Verteilerkanäle 14 nach innen wenigstens teilweise durch entsprechende Abschnitte der Zellrahmenelemente 3 verschlossen sind und/oder dass die Verteilerkanäle 14 wenigstens teilweise durch die Membran 15 verschlossen sind.

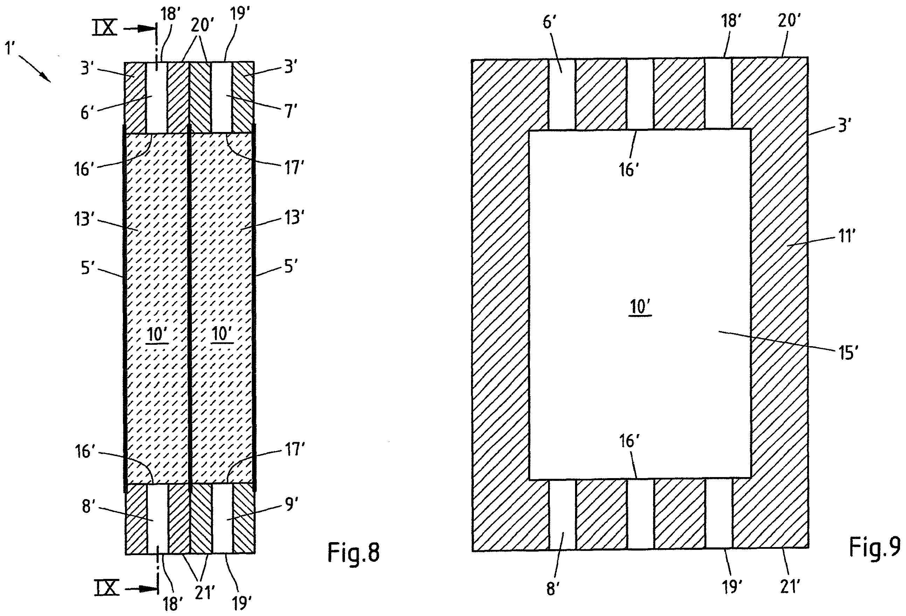

In der Fig. 8 ist eine weitere Zelle 1' eines Zellstacks in einer Schnittansicht dargestellt. Diese Zelle 1' umfasst im Unterschied zu der in der Fig. 4 dargestellten Zelle lediglich zwei Zellrahmenelemente 3', wie sie in der Fig. 9 in einer Schnittansicht dargestellt sind. Diese beiden Zellrahmenelemente 3' umschließen mittels entsprechender Rahmen 11' umlaufend die Zellinnenräume 10' der Halbzellen der dargestellten Zelle 1' und weisen jeweils mehrer Kanäle 6',7',8',9' auf, die sich im Wesentlichen parallel zu den Zellinnenräumen 10' erstrecken. Durch diese Kanäle 6',7',8',9' kann ein Elektrolyt dem jeweiligen Zellinnenraum 10'zugeführt werden und wieder aus dem Zellinnenraum 10'abgeführt werden. Da die Kanäle 6',7',8',9' vollständig in den Zellrahmenelementen 3' verlaufen und lediglich Öffnungen 16',17' zum Zellinnenraum 10 und Öffnungen 18',19' an den Schmalseiten 20',21' der Zellrahmenelemente 3' aufweisen, besteht keine Gefahr der Vermischung der Elektrolyte untereinander oder eines unerwünschten Kontakts zwischen den Elektrolyten und den Elektroden 5'. Die Zellinnenräume 13' weisen Reaktionsfilze 13' auf. Die die Zellinnenräume 10' umschließenden Rahmen 11' der Zellrahmenelemente 3' können daher verhältnismäßig schmal ausgebildet werden. Zudem können die Zellrahmenelemente 3' stirnseitig direkt mit einer Elektrode 5' und der Membran 15' der Zelle verschweißt werden. Bedarfsweise können die Zellrahmenelemente 3' zusätzlich direkt miteinander verschweißt sein.

Als Abwandlung gegenüber der Zelle gemäß Fig. 8 können die Kanäle 6',7',8',9' als einseitig offene Kanäle in die Zellrahmenelemente 3' ohne großen Aufwand einbebracht sein. Die Kanäle 6',7',8',9' können dann nämlich stirnseitig durch Verschweißen der entsprechenden Zellrahmenelemente 3' mit einer Elektrode 5' oder einer Membran 15' verschlossen werden.

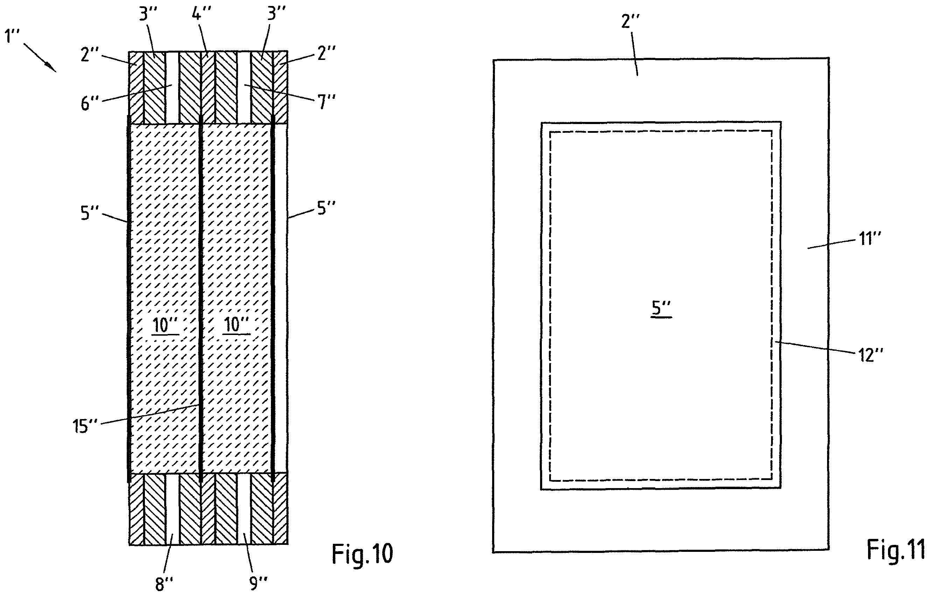

In der Fig. 10 ist eine weitere Zelle 1" eines Zellstacks in einer Schnittansicht dargestellt. Die Zelle 1" umfasst fünf Zellrahmenelemente 2",3",4", wobei die beiden die Zellinnenräume 10" der Halbzellen umlaufend umschließenden Zellrahmenelemente 3" dem in der Fig. 9 dargestellten Zellrahmenelement 3' entsprechen. Nach außen sind die Zellinnenräume 10" der Zellrahmenelemente 3" mittels eines weiteren in der Fig. 11 dargestellten Zellrahmenelements 2" und einer Elektrode 5" abgeschlossen, die mit dem weiteren Zellrahmenelement 2" und zwar am Rahmen 11" des Zellrahmenelements 2" umlaufend zum Rand 12" der Elektrode 5" verschweißt ist. Die entsprechenden Schweißnähte zwischen den Zellrahmenelementen 2" und der Elektrode 5" sind flüssigkeitsdicht ausgeführt. Zudem sind die entsprechenden Zellrahmenelemente 2",3" direkt umlaufend miteinander verschweißt, so dass auch zwischen diesen Zellrahmenelementen 2",3" kein Elektrolyt austreten kann. Der Rahmen 11" des Zellrahmenelements 2" ist verhältnismäßig schmal ausgebildet und kommt ohne Kanäle zum Durchleiten von Elektrolyt aus.

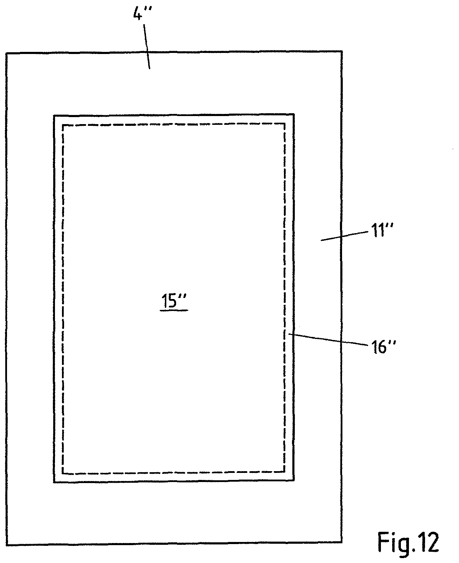

In der Mitte der Zelle 1" werden die beiden Halbzellen nach innen durch eine Membran 15" verschlossen, die mit dem Rahmen 11" eines weiteren in der Fig. 12 dargestellten Zellrahmenelements 4" umlaufend zu den Rändern 16" der Membran 15" verschweißt ist. Das mittige Zellrahmenelement 4" ist nicht nur mit der Membran 15", sondern auch direkt und umlaufend mit den zu beiden Seiten angrenzenden Zellrahmenelementen 3" verschweißt. Damit ist auch die in der Fig. 10 dargestellte Zelle 1" mit Ausnahme der Kanäle 6",7",8",9"flüssigkeitsdicht ausgebildet.

## Patentansprüche

1. Zelle (1) einer Redox-Flow-Batterie, mit wenigstens einem Zellrahmenelement (2,3,4), einer Membran (15) und zwei Elektroden (5), wobei das wenigstens eine Zellrahmenelement (2,3,4), die Membran (15) und die zwei Elektroden (5) zwei voneinander getrennte Zellinnenräume (10) umschließen, wobei in dem wenigstens einen Zellrahmenelement (2,3,4) wenigstens vier separate Kanäle (6,7,8,9) so vorgesehen sind, dass die beiden Zellinnenräume (10) von unterschiedlichen Elektrolytlösungen durchströmt werden können, und wobei die Zelle (1) mit Ausnahme der wenigsten vier separaten Kanäle (6,7,8,9) flüssigkeitsdicht ausgebildet ist, wobei wenigstens das wenigstens eine Zellrahmenelement (2,3,4) mit der Membran (15), den beiden Elektroden (5) und/oder mit wenigstens einem weiteren Zellrahmenelement (2,3,4) verschweißt ist
**dadurch gekennzeichnet, dass**
wenigstens fünf Zellrahmenelemente (2,3,4) vorgesehen sind und dass die beiden Elektroden (5) und die Membran (15) jeweils mit einem separaten Zellrahmenelement (2,4) verschweißt sind.

2. Zelle nach Anspruch 1,
**dadurch gekennzeichnet, dass**
das wenigstens eine Zellrahmenelement (2,3,4) mit der Membran (15), den beiden Elektroden (5) und/oder mit wenigstens einem weiteren Zellrahmenelement (2,3,4) durch Laserschweißen, Heißluftschweißen, Heizelementschweißen und/oder Ultraschallschweißen verschweißt ist.

3. Zelle nach Anspruch 1 oder 2,
**dadurch gekennzeichnet, dass**
das wenigstens eine Zellrahmenelement (2,3,4), die wenigstens eine Elektrode (5) und/oder die Membran (15) aus Kunststoff und/oder einem Kunststoff enthaltenden Verbundwerkstoff gebildet ist.

4. Zelle nach Anspruch 3,
**dadurch gekennzeichnet, dass**
der Kunststoff ein Thermoplast, vorzugsweise Polyethylen (PE), Polypropylen (PP), Polyphenylensulfid (PPS), Polyetheretherketon (PEEK), Polyvinylchlorid (PVC) und/oder Polyamid (PA), ist.

5. Zelle nach einem der Ansprüche 1 bis 4,
**dadurch gekennzeichnet, dass**
die Membran (15) und/oder die wenigstens eine Elektrode (5) flüssigkeitsdicht von einem Zellrahmenelement (2,3,4) umspritzt oder umgossen ist und/oder dass die Membran (15) und/oder die wenigstens eine Elektrode (5) durch Pressung zwischen zwei miteinander verschweißten Zellrahmenelementen (2,3,4) flüssigkeitsdicht gehalten ist.

6. Zelle nach einem der Ansprüche 1 bis 5,
**dadurch gekennzeichnet, dass**
die wenigstens vier Kanäle (6,7,8,9) Öffnungen (18,19) an wenigstens zwei Schmalseiten (20,21) der Zelle (1) und/oder wenigstens eines Zellrahmenelements (3) aufweisen.

7. Zelle nach einem der Ansprüche 1 bis 6,
**dadurch gekennzeichnet, dass**
die Membran (15) und/oder wenigstens eine Elektrode (5) mit wenigstens einem Zellrahmenelement (2,3,4) verschweißt ist.

8. Zelle nach einem der Ansprüche 1 bis 7,
**dadurch gekennzeichnet, dass**
wenigstens zwei Zellrahmenelemente (2,3,4) vorgesehen sind, dass ein Zellrahmenelement (2,3,4) mit der Membran (15), mit einer Elektrode (5) und mit einem weiteren, vorzugsweise mit der weiteren Elektrode (5) verschweißten, Zellrahmenelement (2) verschweißt ist.

9. Zelle nach einem der Ansprüche 1 bis 8,
**dadurch gekennzeichnet, dass**
zwei Zellrahmenelemente (2,3,4) miteinander verschweißt sind und/oder dass die Membran (15) mit zwei Zellrahmenelementen (3) verschweißt ist.

10. Zelle nach einem der Ansprüche 1 bis 9,
**dadurch gekennzeichnet, dass**
wenigstens zwei Zellrahmenelemente (3) jeweils mit einer Elektrode (5) und mit der Membran (15) verschweißt sind.

11. Zelle nach einem der Ansprüche 1 bis 10,
**dadurch gekennzeichnet, dass**
die fünf Zellrahmenelemente (2,3,4) untereinander verschweißt sind.

12. Zelle nach einem der Ansprüche 1 bis 11,
**dadurch gekennzeichnet, dass**
die Elektrode (5) aus einem Verbund aus einem Kunststoff und leitfähigen Partikeln, vorzugsweise in Form von Graphit, gebildet ist.

13. Zellstack einer Redox-Flow-Batterie, **dadurch gekennzeichnet**, das wenigstens eine Zelle (1) nach einem der Ansprüche 1 bis 12 vorgesehen ist.

14. Zellstack nach Anspruch 13,
**dadurch gekennzeichnet, dass**
die wenigstens eine Zelle (1), insbesondere ein Zellrahmenelement (2) oder eine Elektrode (5) mit einem Zellrahmenelement (2) einer angrenzenden Zelle (1) verschweißt ist.

15. Zellstack nach Anspruch 13 oder 14,
**dadurch gekennzeichnet, dass**
die Zellen (1) jeweils an gegenüberliegenden Stirnseiten mit einem, vorzugsweise mit einer Membran (15) verschweißten, Zellrahmenelement (3) einer angrenzenden Zelle verschweißt sind.

## Claims

1. Cell (1) of a redox flow battery, with at least one cell frame element (2, 3, 4), a membrane (15) and two electrodes (5), wherein the at least one cell frame element (2, 3, 4), the membrane (15) and the two electrodes (5) enclose two cell internal spaces (10) separated from one another, wherein in the at least one cell frame element (2, 3, 4) at least four separate channels (6, 7, 8, 9) are provided such that the two cell internal spaces (10) can be flowed through by different electrolyte solutions and wherein the cell (1) is designed in a liquid-tight manner with the exception of the at least four separate channels (6, 7, 8, 9), wherein at least the at least one cell frame element (2, 3, 4) is welded with the membrane (15), the two electrodes (5) and/or with at least one further cell frame element (2, 3, 4), **characterised in that** at least five cell frame elements (2, 3, 4) are provided and **in that** the two electrodes (5) and the membrane (15) are in each case welded with a separate cell frame element (2, 4).

2. Cell according to claim 1, **characterised in that** the at least one cell frame element (2, 3, 4) is welded with the membrane (15), the two electrodes (5) and/or with at least one further cell frame element (2, 3, 4) by laser welding, hot air welding, hot plate welding and/or ultrasonic welding.

3. Cell according to claim 1 or 2, **characterised in that** the at least one cell frame element (2, 3, 4), the at least one electrode (5) and/or the membrane (15) is formed from plastic and/or a composite material containing plastic.

4. Cell according to claim 3, **characterised in that** the plastic is a thermoplastic, preferably polyethylene (PE), polypropylene (PP), polyphenylene sulphide (PPS), polyether ether ketone (PEEK), polyvinyl chloride (PVC) and/or polyamide (PA).

5. Cell according to any one of claims 1 to 4, **characterised in that** the membrane (15) and/or the at least one electrode (5) is overmoulded or recast in a fluid-tight manner by a cell frame element (2, 3, 4) and/or **in that** the membrane (15) and/or the at least one electrode (5) is held in a fluid-tight manner by pressing between two cell frame elements (2, 3, 4) welded together.

6. Cell according to any one of claims 1 to 5, **characterised in that** the at least four channels (6, 7, 8, 9) have openings (18, 19) on at least two narrow sides (20, 21) of the cell (1) and/or at least one cell frame element (3).

7. Cell according to any one of claims 1 to 6, **characterised in that** the membrane (15) and/or at least one electrode (5) is welded with at least one cell frame element (2, 3, 4).

8. Cell according to any one of claims 1 to 7, **characterised in that** at least two cell frame elements (2, 3, 4) are provided, **in that** a cell frame element (2, 3, 4) is welded with the membrane (15), with an electrode (5) and with a further cell frame element (2) preferably welded with the further electrode (5).

9. Cell according to any one of claims 1 to 8, **characterised in that** two cell frame elements (2, 3, 4) are welded together and/or **in that** the membrane (15) is welded with two cell frame elements (3).

10. Cell according to any one of claims 1 to 9, **characterised in that** at least two cell frame elements (3) are in each case welded with an electrode (5) and with the membrane (15).

11. Cell according to any one of claims 1 to 10, **characterised in that** the five cell frame elements (2, 3, 4) are welded together.

12. Cell according to any one of claims 1 to 11, **characterised in that** the electrode (5) is formed from a composite made of a plastic and conductive particles, preferably in the form of graphite.

13. Cell stack of a redox flow battery, **characterised in that** at least one cell (1) according to any one of claims 1 to 12 is provided.

14. Cell stack according to claim 13, **characterised in that** the at least one cell (1), in particular a cell frame element (2) or an electrode (5) is welded with a cell frame element (2) of a bordering cell (1).

15. Cell stack according to claim 13 or 14, **characterised in that** the cells (1) are in each case welded on opposing end sides with a cell frame element (3) of a bordering cell, preferably welded with a membrane (15).

## Revendications

1. Cellule (1) d'une batterie à flux redox pourvue au moins d'un élément cadre de cellule (2, 3, 4), d'une membrane (15) et de deux électrodes (5), l'au moins un élément cadre de cellule (2, 3, 4), la membrane (15) et les deux électrodes (5) entourant deux espaces intérieurs de cellule (10) séparés l'un de l'autre, au moins quatre canaux (6, 7, 8, 9) séparés étant ménagés dans l'au moins un élément cadre de cellule (2, 3, 4), de telle manière que les deux espaces intérieurs de cellule (10) peuvent être traversés par différentes solutions d'électrolyte, et la cellule (1) étant conçue étanche au liquide, à l'exception des au moins quatre canaux (6, 7, 8, 9) séparés, au moins l'au moins un élément cadre de cellule (2, 3, 4) étant soudé à la membrane (15), aux deux électrodes (5) et/ou à au moins un autre élément cadre de cellule (2, 3, 4), **caractérisée en ce que** l'on prévoit au moins cinq éléments cadre de cellule (2, 3, 4) et **en ce que** les deux électrodes (5) et la membrane (15) sont soudées respectivement avec un élément cadre de cellule (2, 4) séparé.

2. Cellule selon la revendication 1, **caractérisée en ce que** l'au moins un élément cadre de cellule (2, 3, 4) est soudé avec la membrane (15), les deux électrodes (5) et/ou avec au moins un autre élément cadre de cellule (2, 3, 4) par soudage laser, soudage à air chaud, soudage par éléments chauffants et/ou soudage aux ultrasons.

3. Cellule selon la revendication 1 ou 2, **caractérisée en ce que** l'au moins un élément cadre de cellule (2, 3, 4), l'au moins une électrode (5) et/ou la membrane (15) sont formés en matière synthétique et/ou en un matériau composite contenant une matière synthétique.

4. Cellule selon la revendication 3, **caractérisée en ce que** la matière synthétique est une matière thermoplastique, de préférence polyéthylène (PE), polypropylène (PP), polyphénylènesulfure (PPS), polyétheréthercétone (PEEK), chlorure de polyvinyle (PVC) et/ou polyamide (PA).

5. Cellule selon l'une des revendications 1 à 4, **caractérisée en ce que** la membrane (15) et/ou l'au moins un électrode (5) est revêtue par injection ou surmoulée, de façon étanche aux liquides, par un élément cadre de cellule (2, 3, 4) et/ou **en ce que** la membrane (15) et/ou l'au moins un électrode (5) est maintenue par pression, de façon étanche aux liquides, entre deux éléments cadre de cellule soudés l'un à l'autre (2, 3, 4).

6. Cellule selon l'une des revendications 1 à 5, **caractérisée en ce que** les aux moins quatre canaux (6, 7, 8, 9) présentent des ouvertures (18,19) sur au moins deux côtés étroits (20, 21) de la cellule (1) et/ou présentent au moins un élément cadre de cellule (3).

7. Cellule selon l'une des revendications 1 à 6, **caractérisée en ce que** la membrane (15) et/ou au moins une électrode (5) est soudée avec au moins un élément cadre de cellule (2, 3, 4).

8. Cellule selon l'une des revendications 1 à 7, **caractérisée en ce que** l'on prévoit au moins deux éléments cadre de cellule (2, 3, 4), **en ce qu'**un élément cadre de cellule (2, 3, 4) est soudé avec la membrane (15), avec une électrode (5) et avec un autre élément cadre de cellule (2), de préférence soudé avec l'autre électrode (5).

9. Cellule selon l'une des revendications 1 à 8, **caractérisée en ce que** deux éléments cadre de cellule (2, 3, 4) sont soudés l'un à l'autre et/ou **en ce que** la membrane (15) est soudée avec deux éléments cadre de cellule (3).

10. Cellule selon l'une des revendications 1 à 9, **caractérisée en ce qu'**au moins deux éléments cadre de cellule (3) sont soudés respectivement avec une électrode (5) et avec la membrane (15).

11. Cellule selon l'une des revendications 1 à 10, **caractérisée en ce que** les cinq éléments cadre de cellule (2, 3, 4) sont soudés entre eux.

12. Cellule selon l'une des revendications 1 à 11, **caractérisée en ce que** l'électrode (5) est formée à partir d'un composite en matière synthétique et particules conductrices, de préférence sous forme de graphite.

13. Pile de cellule d'une batterie à flux redox, **caractérisée en ce que** l'on prévoit au moins une cellule (1) selon l'une des revendications 1 à 12.

14. Pile de cellule selon la revendication 13, **caractérisée en ce que** l'au moins une cellule (1), en particulier un élément cadre de cellule (2) ou une électrode (5) est soudée avec un élément cadre de cellule (2) d'une cellule adjacente (1).

15. Pile de cellule selon la revendication 13 ou 14, **caractérisée en ce que** les cellules (1) sont soudées, respectivement sur des faces avant opposées, avec un élément cadre de cellule (3) d'une cellule adjacente, cet élément cadre de cellule (3) étant de préférence soudé avec une membrane (15).
